# EUROPEAN PATENT APPLICATION

(11) **EP 3 121 555 A1**
(43) Date of publication of application: **25.01.2017**
(21) Application number: 15020124.2
(22) Date of filing: 22.07.2015
(51) Int. Cl.: G01B 7/287, B28B 7/02, G01B 7/00

(54) **THE DEVICE FOR DIGITAL MODELLING OF THE ACTUAL SURFACES**

(71) Applicant: Rutkiewicz Lukasz trade as VERTICA, 85-758 Bydgoszcz (PL)
(72) Inventor: Rutkiewicz Lukasz trade as VERTICA, 85-758 Bydgoszcz (PL)
(74) Representative: Cwiklinski, Grzegorz

(57) **Abstract**

The device is characterized in that the molding pin comprises an elongate casing 1 with the inserted spindle 2 comprising successively respectively: the first part 3 made with hard magnetic material, the second part 4 with nonmagnetic material and the third part 5 made with hard magnetic material, and on the first part of the spindle 3 and on the third part 5 of the spindle 2 the electric coils are slid 6, 7.

## Description

The invention is the device for digital modelling of the actual surfaces applicable in industry, especially in the processing of plastics in the exercise of models and prototypes. The device can be also useful in the short-serial production or individual products made with plastics or rubber.

There are no known devices for digital modelling of the actual surfaces. However, there is a range of solutions for the positioning of a single element disposed in the electromagnetic field. For example, the publication WO2013174483A2 disclosing the method of determining the position of the mobile unit having a first coil disposed in relation to the stationary second coil and a system for carrying out the method where the first coil has two partial windings, the second coil has also two partial windings, with determined intensity of inductive coupling of the partial windings of the first coil or of the first coil with the partial windings of the second coil or the second coil, where the phase delay of the alternating voltage induced signals is marked, with the range of positions determined based on the intensity of the coupling, where the phase delay is the unambiguous function of the position and the position is determined based on the phase delay.

The use of AC is the disadvantage of the solution, making it impossible to use it in electronic circuits of constant voltage.

The essence of the invention is that it comprises a series of molding pins disposed in parallel side by side in the X axis and the Y axis, and the ends of these pins are located at the same height constituting a plane. Each molding pin has a spindle, consisting respectively of three parts: the first one made with hard magnetic material, the second nonmagnetic and the third made with hard magnetic material, and on the first part of the spindle and on the third part of the spindle the electric coils are slid to form respectively the first positioning section and the second positioning section, wherein the coils generate the magnetic fields with opposite-direction currents. Molding pins are connected in blocks and the executive system controls their location with each of them in the Z-axis through multiplexers and executive system is connected to the microcontroller which is connected to the interface.

Preferably, when the ends of the molding pins are adjacent to each other.

The device operates as follows. The current flow through the coils creates magnetic fields with opposite polarities. The coil of the first section pushes the spindle out of the casing while the second coil section retracts the spindle into the casing. By controlling the current values of the respective molding pins, that is realized by the executive system based on the signals from the microcontroller, which receives properly processed data via an interface, for example from the computer program such as CAD, precise spindle alignment of the molding pin follows. Molding pins are connected in blocks and the primary one will be joined in groups forming larger molding areas.

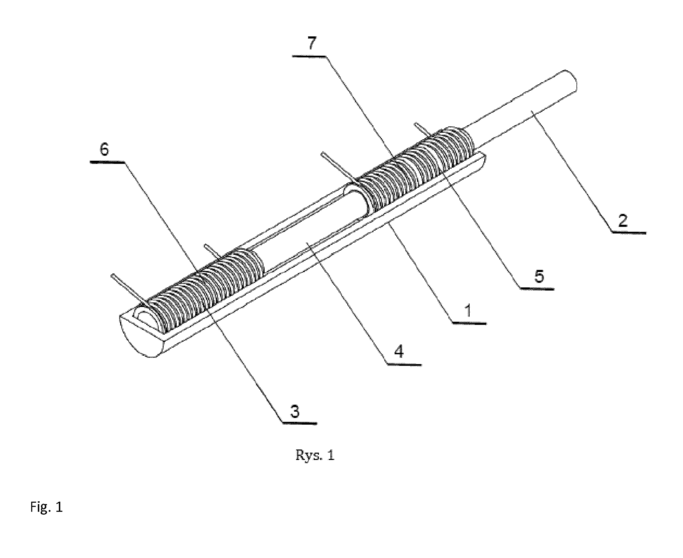

An example of the realization of the invention is shown in the drawing, in which Fig. 1 represents a single molding pin, which comprises an elongate casing 1 with the inserted spindle 2 comprising successively connected the first part 3 made with hard magnetic material, the second part 4 with nonmagnetic material and the third part made with hard magnetic material, and on the first part of the spindle 3 and on the third part 5 of the spindle 2 the electric coils are slid 6, 7.

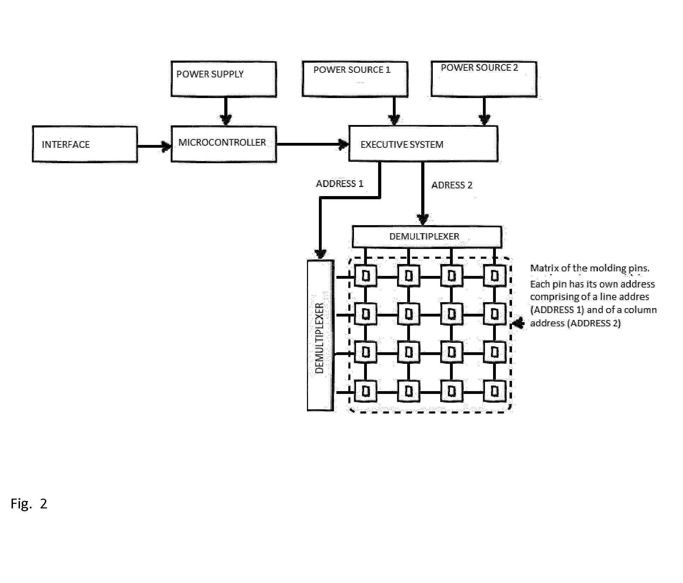

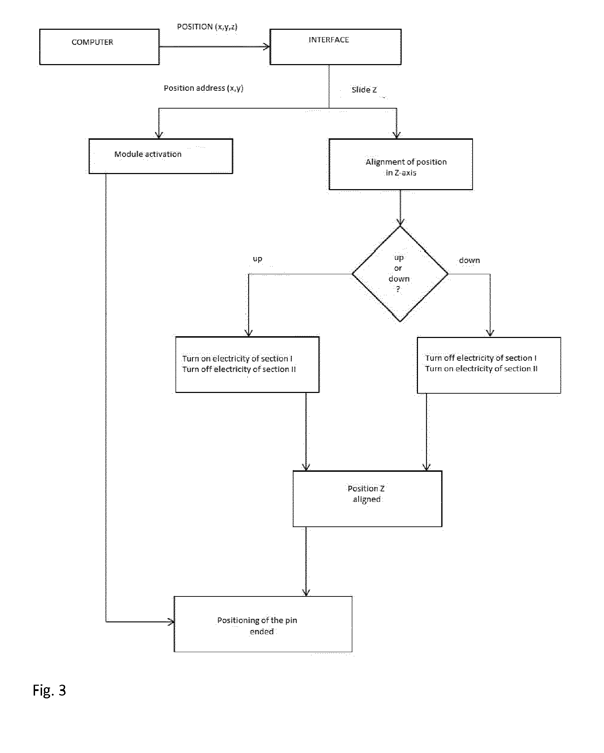

Fig. 2 shows a block diagram of the executive system realizing the invention. The system includes interface -a block responsible for receiving information from the outside for example from a computer that is connected to the device according to the invention. Its task is to adjust the signal from the outside to the standards to be adopted by microcontroller - a block that accepts external input signals indicating the address of the molding pin and the height of the spindle protrusion and converts it into the signals for the executive system. Block- an executive system - processes the received information from the microcontroller about the address of the molding pin contained in the matrix supported by the system and about the flow of current in the two coils determining the sliding of the molding pin to a specific height in accordance with the signal sent from the outside. Fig. 3 shows schematically the signal processing algorithm as described above.

## Claims

1. The device for digital modelling of the actual surfaces comprising electric coils **characterized in that** it comprises series of molding pins disposed in parallel side by side in the X axis and the Y axis, and the ends of these pins are located at the same height constituting a plane, and each molding pin has a spindle ( 2 ) consisting respectively of three parts: the first one ( 3 ) made with hard magnetic material, the second part ( 4 ) with nonmagnetic material and the third part ( 5 ) made with hard magnetic material, and on the first part of the spindle ( 3 ) and on the third part ( 5 ) of the spindle the electric coils are slid 6, 7 forming respectively the first positioning section and the second positioning section, wherein the coils ( 6, 7 ) generate the magnetic fields with opposite-direction currents, wherein the molding pins are connected in blocks and the executive system controls their location with each of them in the Z-axis through multiplexers and executive system is connected to the microcontroller which is connected to the interface.

2. The device according to the claim 1 **characterized in that** the ends of molding pins are disposed side by side.
